# EUROPEAN PATENT APPLICATION

(11) **EP 4 027 275 A1**
(43) Date of publication of application: **13.07.2022**
(21) Application number: 21151138.1
(22) Date of filing: 12.01.2021
(51) Int. Cl.: G06N 20/00, G06N 3/00, G06F 9/50, G06Q 10/00, H04W 4/02

(54) **AVOIDING HIGH COST CLASSIFICATION ERRORS IN MACHINE LEARNING**

(71) Applicant: Nokia Solutions and Networks Oy, 02610 Espoo (FI)
(72) Inventor: Goldstein, Maayan, 4464301 Kfar Sava (IL); Rodriguez-Navas, Guillermo, 9355403 Jerusalem (IL); Segall, Itai, Hoboken, NJ 07030 (US); Sa'ar, Yaniv, 4464301 Kfar Sava (IL)
(74) Representative: Anderson, Oliver Ben

(57) **Abstract**

Disclosed is an apparatus comprising means for receiving, from a machine learning model, a classification of a first input data item, the machine learning model being trained to infer classifications of input data items, wherein determinations relating to performance of real-world actions are based at least in part on the classifications; responsive to the first input data item being classified by the machine learning model as a first classification: determining a robustness of the classification by the machine learning model of the first input data item; and responsive to a determination that the robustness of the classification of the first input data item as the first classification is below a first predefined robustness threshold robustness , outputting a second classification different to the first classification.

## Description

### Field

Embodiments relate to classifying input data using machine learning models.

### Background

In telecommunications network systems (as well as other technical systems), actions may be performed based on output of machine learning models.

For instance, when installing antennas supplying service to cellular devices, the location of the installation of the antennas (for instance, internal or external) may be associated with a trade-off between the quality of service provided by the antennas and the resources (e.g. computational power, electrical power, materials, bandwidth) used in installation, maintaining and running of the service. Machine learning (e.g. a trained machine learning model such as a neural network) may be used in balancing this trade off, for instance, by providing an indication of whether prospective client devices are static (for example, in a building) or in motion (for example on a highway). Deciding to install and/or installing an internal antenna in a building or an external antenna may be based, at least in part, on the indication provided by the machine learning.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising means for receiving, from a machine learning model, a classification of a first input data item, the machine learning model being trained to infer classifications of input data items, wherein determinations relating to performance of real-world actions are based at least in part on the classifications; responsive to the first input data item being classified by the machine learning model as a first classification: determining a robustness of the classification by the machine learning model of the first input data item; and responsive to a determination that the robustness of the classification of the first input data item as the first classification is below a first predefined robustness threshold, outputting a second classification different to the first classification.

The apparatus may comprise means for determining to perform or not perform a particular real-world action based on the output classification; and/or performing the particular real-world action based on the output classification.

The determinations relating to performance of real world actions may comprise controlling or configuring a telecommunication network based at least in part on the classifications.

Performance or non-performance of a particular real-world action based on a first type of misclassification of input data item as the first classification may have a higher potential technical resource cost and/or a more negative effect on provision of a service by a technical system than performance or non-performance of a particular real-world action based on a second type of misclassification of input data item as the second classification.

The determination of at least some of the costs of performance of the particular real world actions based on the misclassifications may be based on user input. Additionally or alternatively, determination of at least some of the costs of performance of the particular real-world actions based on the misclassifications may be based on a calculation of the potential technical resource cost and/or effect on provision of the service by a technical system in respect of which the real-world action is to be performed.

Determining the robustness of the classification of the input data item by the machine learning model may comprise inputting the machine learning model and the input data item to a robustness verifier; and receiving, from the robustness verifier, data item indicative of a robustness of the classification.

The means may be configured to respond to the first input data item being classified by the machine learning model as a classification other than the first classification by outputting the classification other than the first classification.

The machine learning model may have been trained on an oversampled training dataset, the oversampled training dataset being generated by oversampling input data items labelled as the second classification by: responsive to determining that a classification of the first classification, by an initial machine learning model, of an input training data item from an initial training dataset used to train the initial machine learning model, has a robustness below a second predetermined robustness threshold, adding to the initial dataset a new input training data item having the second classification.

The oversampling may comprise, for a given input data item labelled as the first classification: determining, based on a robustness verifier, (i) a robustness of a classification, by the initial machine learning model, of the given input data item and (ii) a counter example data item, wherein the initial machine learning model would determine the second classification for the counter example data item; and responsive to a determination that the robustness of the classification of the data item using the initial machine learning model is below the second predetermined robustness threshold, adding, to the oversampled dataset, the counter example data item. The robustness may be indicative of perturbations required to be applied to the given input data item to change the classification, by the initial machine learning model, to the second classification, and wherein the counter example data item may be generated by modifying the given input data item based on the perturbations. The initial training dataset may include a greater number of input data items labelled as the first classification than input data items labelled as the second classification.

The apparatus may be, or maybe part of a system for installing cellular antennas using 3D geo-location, wherein the machine learning model may be configured to classify cellular devices detected by the system as being static or in motion and the determinations relating to performance of real world actions may comprise determining a configuration of installation of a cellular antenna based at least in part on the classifications by the machine learning model. Installing a cellular antenna based on a misclassification by the machine learning model that an in-motion detected device is static may have a higher potential technical resource cost than installing a cellular antenna based on a misclassification by the machine learning model that a static detected device is in motion.

The apparatus may be, or maybe part of a system for use in a cloud service controller, wherein the machine learning model may be configured to classify a cloud service load data item as an indication as to whether to scale up the cloud service or scale down the cloud service, and the determinations relating to performance of real world actions may comprise determining whether to scale up the cloud service or scale down the cloud service based at least in part on the classifications by the machine learning model. Scaling down the cloud service based on a misclassification by the machine learning model of the cloud service load data item may have a higher potential technical resource cost than scaling up the cloud service based on a misclassification by the machine learning model of the cloud service load data.

According to a second aspect, there is described an apparatus comprising means for: for one or more input data items in an initial training dataset used to train an initial machine learning model, wherein the one or more input data items would be classified by the initial machine learning model as a first classification: determining, based on a robustness verifier, (i) a robustness of the classification, by the trained initial machine learning model, of the input data item and (ii) a counter example data item, wherein the counter example data item is such that the initial machine learning model would determine a second classification for the counter example data item; and responsive to a determination that the robustness of the classification of the input data item using the initial machine learning model is below a predefined robustness threshold, adding the counter example data item to the initial training data set to create an oversampled data set; and training a further machine learning model on the oversampled dataset.

According to a third aspect, there is described a method comprising: receiving, from a machine learning model, a classification of a first input data item, the machine learning model being trained to infer classifications of input data items, wherein determinations relating to performance of real-world actions are based at least in part on the classifications; responsive to the first input data item being classified by the machine learning model as a first classification: determining a robustness of the classification by the machine learning model of the first input data item; and responsive to a determination that the robustness of the classification of the first input data item as the first classification is below a first predefined robustness threshold, outputting a second classification different to the first classification.

The method may comprise performing the particular real-world action based on the output classification. Additionally or alternatively, the method may comprise determining to perform or nor perform a particular real-world action based on the output classification.

The particular real-world action may comprise controlling or configuring a telecommunication network based at least in part on the classifications. Additionally or alternatively, the determinations relating to performance of real world actions may comprise controlling or configuring a telecommunication network based at least in part on the classifications.

Performance or non-performance of a particular real-world action based on a first type of misclassification of input data item as the first classification may have a higher potential technical resource cost and/or a more negative effect on provision of a service by a technical system than performance or non-performance of a particular real-world action based on a second type of misclassification of input data item as the second classification.

The determination of at least some of the costs of performance of the particular real world actions based on the misclassifications may be based on user input. Additionally or alternatively, determination of at least some of the costs of performance of the particular real-world actions based on the misclassifications may be based on a calculation of the potential technical resource cost and/or effect on provision of the service by a technical system in respect of which the real-world action is to be performed.

Determining the robustness of the classification of the input data item by the machine learning model may comprise inputting the machine learning model and the input data item to a robustness verifier; and receiving, from the robustness verifier, data item indicative of a robustness of the classification.

The method may further comprise responding to the first input data item being classified by the machine learning model as a classification other than the first classification by outputting the classification other than the first classification.

The machine learning model may have been trained on an oversampled training dataset, the oversampled training dataset being generated by oversampling input data items labelled as the second classification by: responsive to determining that a classification of the first classification, by an initial machine learning model, of an input training data item from an initial training dataset used to train the initial machine learning model, has a robustness below a second predetermined robustness threshold, adding to the initial dataset a new input training data item having the second classification.

The oversampling may comprise, for a given input data item labelled as the first classification: determining, based on a robustness verifier, (i) a robustness of a classification, by the initial machine learning model, of the given input data item and (ii) a counter example data item, wherein the initial machine learning model would determine the second classification for the counter example data item; and responsive to a determination that the robustness of the classification of the data item using the initial machine learning model is below the second predetermined robustness threshold, adding, to the oversampled dataset, the counter example data item. The robustness may be indicative of perturbations required to be applied to the given input data item to change the classification, by the initial machine learning model, to the second classification, and wherein the counter example data item may be generated by modifying the given input data item based on the perturbations. The initial training dataset may include a greater number of input data items labelled as the first classification than input data items labelled as the second classification.

The method may be for installing cellular antennas using 3D geo-location, wherein the machine learning model may be configured to classify cellular devices detected by the system as being static or in motion and the determinations relating to performance of real world actions may comprise determining a configuration of installation of a cellular antenna based at least in part on the classifications by the machine learning model. Installing a cellular antenna based on a misclassification by the machine learning model that an in-motion detected device is static may have a higher potential technical resource cost than installing a cellular antenna based on a misclassification by the machine learning model that a static detected device is in motion.

The apparatus may be for use in a cloud service controller, wherein the machine learning model may be configured to classify a cloud service load data item as an indication as to whether to scale up the cloud service or scale down the cloud service, and the determinations relating to performance of real world actions may comprise determining whether to scale up the cloud service or scale down the cloud service based at least in part on the classifications by the machine learning model. Scaling down the cloud service based on a misclassification by the machine learning model of the cloud service load data item may have a higher potential technical resource cost than scaling up the cloud service based on a misclassification by the machine learning model of the cloud service load data.

According to a fourth aspect, there is described a method comprising: for one or more input data items in an initial training dataset used to train an initial machine learning model, wherein the one or more input data items would be classified by the initial machine learning model as a first classification: determining, based on a robustness verifier, (i) a robustness of the classification, by the trained initial machine learning model, of the input data item and (ii) a counter example data item, wherein the counter example data item is such that the initial machine learning model would determine a second classification for the counter example data item; and responsive to a determination that the robustness of the classification of the input data item using the initial machine learning model is below a predefined robustness threshold, adding the counter example data item to the initial training data set to create an oversampled data set; and training a further machine learning model on the oversampled dataset.

According to a fifth aspect, there is provided a computer program product comprising a set of instructions which, when executed on an apparatus, cause the apparatus to carry out the method of any method definition of the third and fourth aspects.

According to a sixth aspect, there is provided a non-transitory computer readable medium comprising program instructions stored thereon for performing a method comprising: receiving, from a machine learning model, a classification of first input data items, the machine learning model being trained to infer classifications of input data items, wherein determinations relating to performance of real-world actions are based at least in part on the classifications; responsive to the first input data item being classified by the machine learning model as a first classification: determining a robustness of the classification by the machine learning model of the first input data item; and responsive to a determination that the robustness of the classification of the first input data item as the first classification is below a first predefined robustness threshold, outputting a second classification different to the first classification.

The program instructions of the sixth aspect may also perform operations according to any method definition of the third and fourth aspects.

According to a seventh aspect, there is provided an apparatus comprising: at least one processor; and at least one memory including computer program code which, when executed by the at least one processor, causes the apparatus to: receive, from a machine learning model, a classification of a first input data item, the machine learning model being trained to infer classifications of input data items, wherein determinations relating to performance of real-world actions are based at least in part on the classifications; responsive to the first input data item being classified by the machine learning model as a first classification: determine a robustness of the classification by the machine learning model of the first input data item; and responsive to a determination that the robustness of the classification of the first input data item as the first classification is below a first predefined robustness threshold, output a second classification different to the first classification.

The computer program code of the seventh aspect may also cause performance of operations according to any method definition of the third and fourth aspects.

### Brief Description of the Drawings

Example embodiments will now be described by way of non-limiting examples, with reference to the accompanying drawings, in which:
Figure 1 is a simplified schematic indicating example operations which may be performed in implementations of the disclosed technology;
Figure 2 is a simplified schematic indicating other example operations which maybe performed in training a machine learning model;
Figure 3 illustrates an example of oversampling;
Figure 4 is a simplified schematic of an antenna location planning system;
Figures 5 and 6 are flow diagrams showing operations that may be performed in various examples of the described technology;
Figure 7 is a schematic view of an example apparatus which may be configured to perform various operations described herein; and
Figure 8 is a non-transitory medium which may be used to store computer-readable code which, when executed by one or more processors of an apparatus, may cause performance of various operations described herein.

### Detailed Description

In the description and drawings, like reference numerals refer to like elements throughout.

In telecommunications networks, machine learning (ML) may be used in various applications. One such example of an application of ML in telecommunications networks is to determine allocation of resources to services. The determination of the allocation of resources to services may be based, at least in part, on a Quality of Service (QoS) requirement. The QoS requirement may, for instance, be set by a user or be a minimum QoS to fulfil the service. In some types of services, there may be a balance between the allocation of resources and the QoS, which, as mentioned, may have a preset requirement or otherwise may be required to be above a certain threshold.

ML techniques can be used to infer, from an input data item, a classification of that data item. In some situations, the classification performed by the ML techniques may not be correct. For instance, the classification of the data item may not reflect the real-world classification of that data item. As an example, a data item may be inferred as class B, when in reality it belongs to class A. Such "misclassifications" may be referred to as "errors".

In some situations, these errors may be associated with different levels of "cost" or importance. This may be because the erroneous classifications may cause or, otherwise result in, performance of "inappropriate" real-world actions, with different inappropriate actions being associated with different levels of negative impact. Such negative impacts may include "unnecessary" expenditure of technical resources and/or negative effects on a particular service that is being, or is to be, provided using a technical system to which the action relates. The technical resource expenditure associated with an erroneous action may be based on an amount of technical resources required to perform the inappropriate action and/or resulting, at least in part, from performance of the "inappropriate" action. A "cost" associated with a particular misclassification may be determined based on both a) the expenditure of technical resources and/or negative effects resulting from performance of a particular inappropriate action (which results from the misclassification) and b) an expenditure of technical resources and/or negative effects resulting not performing the action or performing a different action.

Examples of real-world actions which maybe performed or not performed, based at least in part on machine learning, may include, for instance, installation of a certain type of antenna in a telecommunications network system, installation of an antenna at a particular location in a telecommunications network system, spawning up/down/maintaining virtual machines in a cloud network system, referring a patient likely to have skin cancer for further examination, route planning and execution based on sign/obstacle detection in autonomous vehicles and robots, execution of an alarm, etc. Although only a few examples are mentioned, it will be appreciated that the real-world actions may be any real world actions in connection with any technical system which may be performed or not performed, based at least in part on an output of an ML model.

Technical resource expenditure may for instance result from installation, operation and/or maintenance of a technical system. The technical resources may be, for instance, computer processing resources, electrical power, bandwidth utilisation, physical materials. Although only a few examples are mentioned, the technical resources can be any type of technical resource used in installing, running and/or maintaining a technical system, or for performing any other action within a technical system.

Negative effects on a particular service that is being, or is to be, provided using a technical system may for instance result from decisions made based on an output of an ML model and relating to installation, operation and/or maintenance of the technical system. The negative effects may include, for instance, an increase in the number of instances of disconnections in the service, a reduction in the available bandwidth and/or speed provided by the service, a decrease in any other aspect of the quality of service (QoS), etc.

As an example, certain misclassifications of a ML model in determining the allocation of resources to telecommunications services (e.g. an erroneous classification that results in allocation of more resources) may only lead to a slight, temporary waste of computing resources, whilst others (e.g. an erroneous classification that results in allocation of less resources) may cause more impactful damage, such as poor QoS or complete loss of connectivity. The latter type of erroneous classification may therefore have a higher "cost".

In some known ML techniques, attempts have been made to reduce the number of errors. For instance, attempts have been made to improve the precision and recall of ML models. In other ML techniques, attempts have been made to reduce the amount of resources required to make a classification decision. One such example is described in "Cost-Aware Multi-Objective Optimization of Deep Neural Networks", M.S. Iqbal, et al. However, such attempts do not assign any importance or cost to different types of errors. As such, in principle, errors incurring a high cost may be as likely to arise as errors incurring a low cost.

Various implementations of the technology disclosed herein relate to apparatuses and methods for reducing instances of performance of actions caused by, or otherwise resulting from, higher cost errors. In this way, the unnecessary technical resource expenditure and/or negative technical effects resulting from performance of actions due to misclassifications may be reduced. For instance, the computer processing resources, electrical power, bandwidth utilisation, physical materials, and/or quality of service required to install, run and/or maintain a technical system in which decisions are made at least in part based on ML may be reduced.

As discussed below, implementations of the technology disclosed herein may be used in various applications within telecommunications networks. However, although the technology disclosed herein is generally described in relation to telecommunications networks, it should be understood that it may be used in any application (including but not limited to the any of the examples discussed herein) which involves making decisions and/or performing actions as a result of a classification inferred using ML.

As an example, another domain in which decisions and/or actions are performed as a result of a classification inferred using ML is automated medical image processing. For instance, a ML model may be configured, to determine, based on an image of the skin and other parameters, whether a person might have skin cancer or not. A decision may then be made to refer the person for further medical examination and/or treatment based on the output of the ML model.

Other examples may include, for instance, sign/obstacle detection in autonomous vehicles and robots, wake word detection in voice activated devices, system monitoring and fault diagnosis, detection of malicious behaviour by a user in a technical system, detection of events by a ML-based environmental sensor system, etc.

As mentioned above, machine learning (ML) models may make "mistakes" (or "misclassifications" or "errors"). As also mentioned, some mistakes maybe associated with a higher "cost". This will be described in more detail below using an example in which, for simplicity, a two-class decision problem (also known as binary classification) is considered. However, the technology disclosed herein can be equally used for an N-class classification problem for any arbitrary N.

In the example considering two classes, A and B, two errors may be possible. A first error where a data item with a true classification of A is misclassified as B, and a second error where a data item with a true classification of B is misclassified as A. These errors can be denoted as A=>B and B=>A respectively. In binary classification problems, such misclassification errors may be referred to as false positives and false negatives. For instance, an A=>B error may be considered a false positive and a B=>A error may be considered a false negative, or vice versa.

Some or all of the possible types of errors may be associated with a "cost". The cost may be calculated and/or associated with an error via a function. For instance, the function *cost(A*=*>B)* may provide the cost of the error A=>B and the function *cost(B*=*>A)* may provide the cost of the error B=>A. The cost may indicate the negative impact of an action performed as a result of making a particular type of error. For instance, referring back to the example above of determining allocation of resources to services, the cost may indicate or otherwise be dependent upon the level of attenuation of the Quality of Service (QoS) as a result of making a particular type of error.

In some examples, the cost of a particular type of error may be calculated. Such a calculation may depend on the specific application of the ML. For instance, in the example of using ML to determine the allocation of resources to services, a cost of a particular error may be calculated, at least in part, based on the attenuation to the QoS. For instance, the error may be calculated, at least in part, based on the number of loss of connectivity events which are expected to arise as a result of performance of an action due to the particular error. In some other examples, the cost of a particular type of error may be provided by a user.

In some examples, the costs associated with different types of errors may be different. For instance, the cost of B=>A errors may be higher than the cost of A=>B errors. In examples concerned with multi-class classification with classes C1, C2, ..., Cn, there may be one or more specific types of errors which are higher cost. For instance, misclassifying the class C5 as the class C7 may be a higher cost type of error. In some examples, the cost of a type of error may be defined relative to costs of other types of error. For instance, some or all of the different types of errors may be ranked from lowest cost to highest cost, or vice versa. In addition, or alternatively, the cost of an error may be given as an absolute value.

As mentioned above, an example application in which implementations of the technology disclosed herein may be used is in the determination of the allocation of resources to services. Another example application in which implementations of the technology disclosed herein may be used is in the installation of cellular antennas. In this example, the installation location of antennas maybe determined using 3D geo-location. Specifically, the 3D geo-location may determine locations of prospective client devices and deduce the resulting prospective payload on the service. The 3D geo-location may determine whether the devices are static (for example, in a building) or in motion (for example, on a highway). The determination of whether a device is static or in motion may involve the use of a ML model.

For instance, the ML model may be configured (e.g. trained) to take, as input, a list of detected client devices and/or client device antennas, wherein the detected client devices and/or device antennas may be associated with a strength of a received signal, a caller/session ID, and/or a type of type of client device. The list may also include a temporal aspect such that the ML model is provided with information indicative of which client device and/or client device antennas are nearby, the strength of their signals, and how they change over time. The ML model may provide, based on such input, a determination of whether a particular client device, from the list of detected client devices and/or client device antennas, is static or in motion. Determinations as to the configuration of an installation of cellular antennas may be based, at least in part, on the classifications by the ML model. For instance, installation of a particular type of antenna or at a particular location may be determined and or performed based on the classifications by the ML model. For instance, when classifications by the ML model indicate that one or more in-motion devices are present, installation of an external antenna, outside of a building may be determined and/or performed. Similarly, when classifications by the ML model indicate that one or more static devices are present, installation of an internal antenna, inside of a building, may be determined and/or performed.

Continuing with this example, there may be, at least, two possible errors. A first error may be where a static device is classified as an in-motion device, and a second error may be where an in-motion device is classified as a static device. If a number of errors occur, the planned installation configuration (e.g. location) of an antenna may be not be ideal or appropriate. For instance, if a number of in-motion devices are incorrectly classified as static devices, an internal antenna may be planned and installed inside of a building, when in reality the payload (e.g. the UEs which use the antenna) may instead be on a highway and an external antenna would have been more appropriate.

In some situations, the negative impact of installing an internal antenna inside a building as a result of errors in classifying in motion devices as static devices may be greater than the negative impact of installing an external antenna as a result of errors in classifying static devices as in motion devices. For instance, an antenna that is inappropriately installed outside a building may still provide some QoS to users inside the building, particularly if the external antenna is close to the building. However, the opposite may not hold: an antenna installed inside a building may only give coverage to in-motion users (vehicles) while they are very close to the building and whenever they get farther from the building, another antenna may be required to provide coverage. As such, the negative impact may concern QoS and also potentially additional equipment and installation requirements. As such, errors in classifying in-motion devices as static devices may be associated with a higher cost than errors in classifying static devices as in motion devices.

Another example application in which implementations of the technology disclosed herein may be used is in the control of a cloud network system. In this example, when demand for services from the cloud networking system rises, virtual machines in the cloud networking system may be spawned up (also referred to as "scaled up") to handle the additional load. When demand for services reduces, the virtual machines may be put into idle mode (also referred to as "scaled down") and the physical resources allocated to those machines may be released.

Continuing with this example, the determination of whether to scale up or scale down (and in some situations whether to maintain the level of virtual machines) in the cloud network system may involve the use of ML. For instance, the ML may, responsive to data indicative of a past, current, predicted future, and/or a trend of demand for services in the cloud network system, provide such a determination. For instance, the ML model maybe provided with performance metrics of servers. The performance metrics may comprise one or more of: a CPU usage, a memory usage, a throughput, etc.

As such, in some implementations, there may be at least two types of error provided by ML. A first type of error may be where the ML determines that the cloud network system is to be scaled down when scaling up (or indeed maintaining) would be more appropriate. A second type of error may be where the ML determines that the cloud network system is to be scaled up when scaling down (or maintaining) would be more appropriate.

Incorrect decisions on scaling up or scaling down the cloud networking system can lead to disruption to QoS (e.g. more incidents of disconnections, lower connection speeds, denial of service events, etc.) on one hand and to waste of resources (e.g. electricity, computing resources, etc.) on the other hand. In some situations, the cost of the disruption to QoS as a result of actions based on an erroneous scale down classification may be determined to be higher than the cost of wasting resources as a result of actions based on an erroneous scale up classification. In this case, the second type of error where the ML determines that the cloud network system is to be scaled down when scaling up would have been more appropriate may be associated with a higher cost than the first type of error.

Another example application in which implementations of the technology disclosed herein may be used is in automated medical image processing. For instance, a ML model may be configured, to determine, based on an image of the skin and other parameters, whether a person might have skin cancer or not. The image may comprise a plurality of pixels, which may contain one or more values, for instance, an intensity value in a greyscale image or RGB values in a colour image. The ML model may be configured (e.g. trained) to infer whether the person has a likelihood of having skin cancer above or below a predefined threshold. A decision may then be made to refer the person for further medical examination and/or treatment based on the output of the ML model. The further examination may be performed by a human doctor or expert.

As such, it may be determined that misclassifying a sick patient (i.e. a patient who might have skin cancer) as a healthy patient (i.e. a patient who does not have skin cancer) has high cost because it can lead to decisions which may delay or prevent medical intervention. This may then endanger the patient's health and life, or may lead to more complicated or time intensive medical procedures than would have been required if the patient was referred immediately. Such a misclassification may be defined as a false negative.

On the other hand, if a person is healthy but is misclassified by the ML model as potentially sick (false positive), this may incur unnecessary cost by leading to additional examination. However, such a misclassification may be determined to be less costly than failing to classify a sick patient who does have cancer.

It is also not ideal for the ML model to trivially return that every patient is potentially sick, as that would make the test irrelevant and overload the doctors responsible for the next steps. As such, it may be beneficial for the ML model to be as accurate as possible, to reduce cost, and biased towards preventing false negatives.

In addition, for this problem, datasets for skin cancer may be very unbalanced because most of the training images may be from healthy people.

As such, in this example, the underrepresented class is also the one that may be preferable to bias misclassifications in favour of. In other words, biasing the ML model towards determining that a healthy patient might have cancer and referring them for further review may result in a system which results in a lower cost.

Other example applications in which implementations of the technology disclosed herein may be used is in the fields of autonomous vehicles/robots. In autonomous vehicles, for example, missing a stop sign based on a misclassification by a ML model may have a higher cost than a wrong classification of something else (e.g. Yield) as a stop sign. Similarly, for robotics, missing an obstacle based on a misclassification by a ML model may have a higher cost than classifying non-obstacle as obstacle. In these examples, the ML model maybe provided with sensor data (e.g. image data from an optical sensor) and, in response, provide an indication of the content of the sensor data (e.g. content of a sign, presence of an obstacle, etc.).

Another example application in which implementations of the technology disclosed herein may be used is in wake-word detection in voice-activated devices. For instance, in voice-activated devices, missing a wake-word (e.g. "hey, Computer") based on a misclassification by a ML model may have a higher cost (e.g. a user's perception of bad or unavailable service) than false detection of a wake-word (e.g. cost in wasted energy or computation) based on a misclassification by a ML model. In these examples, the ML model maybe provided with audio data as input and may provide, in response, an indication of whether the audio data contained the wake-word.

Another example application in which implementations of the technology disclosed herein may be used is in a ML-based environmental sensor system. For instance, the ML model may be configured (e.g. trained) to take, as input, sensor data from one or more sensors, and, in response, provide an indication of whether a particular event is occurring. In this example, for some events, e.g. a fire alarm, missing the event based on a misclassification by a ML model may have a higher cost than false detection of events based on a misclassification by a ML model.

Other example applications in which implementations of the technology disclosed herein may be used is in the areas of system monitoring and fault diagnosis. In particular, these example applications may include root cause analysis tools.

In a specific example, an ML model may be configured for use in testing of IP and optical networks. For instance, the ML model may be configured to take, as input, log files, and in response provide a classification of a type of issue being reported. The log files may be analysed to extract one or more keywords appearing in each log line. These keywords may then be processed using standard natural language processing techniques and grouped into a probability matrix. The ML model may then classify, based on the log files, what type of issue(s) is being reported, from among a list of potential issues. The list of potential issues may include a configuration issue, a test case issue, a connection issue, etc. Decisions on what actions to perform to resolve the issues, and indeed their performance may be based on the classifications by the ML model. In some situations a first type of action based on a first misclassification may be more costly than a second type of action based on a second misclassification.

Other example applications in which implementations of the technology disclosed herein may be used is in the area of predictive analytics.

In a specific example, an ML model may be used in the detection of a user's malicious behavior. In this case, in datasets used for training the ML model, input data associated with malicious users may be underrepresented. A first type of misclassification may be to identify a non-malicious user as malicious (i.e. a false positive), and a second type of misclassification may be to identify a malicious user as non-malicious (i.e. a false negative). The cost of the latter error maybe much greater because it means that a malicious user is allowed to continue interaction with the system. The former error (i.e. the false positive) may incur some cost, such as limiting user performance or triggering unnecessary additional checks, but this may be significantly lower than the cost/damage that an unnoticed malicious user can potentially cause to the system. This may be used, for instance, in detecting malicious users by analyzing a user's command patterns.

Another example application in which implementations of the technology disclosed herein may be used is in determining and/or executing remedies to resolve identified problems in a network (e.g. a LTE network) using an ML model. In a network, key performance indicators (KPIs) from the network may indicate a variety of problem levels and consumption characteristics of a cell. These KPIs may therefore be used to determine and execute appropriate actions to keep the network performance at an optimal level. As such, the ML model maybe configured (e.g. trained) to take, as input one or more KPIs and provide, in response, one or more appropriate remedies. It will be appreciated that, in some situations, performance of one particular remedy based on a misclassification by the ML model may be associated with a higher cost than performance of another particular remedy based on a different misclassification.

As illustrated in these examples, in some situations, some types of errors in classifying input data item by a ML model may be more negatively impactful than other types of errors, and may therefore be associated with a relatively higher cost. Various implementations of the technology disclosed herein relate to an apparatus and method for reducing instances of performance of actions arising from higher cost errors.

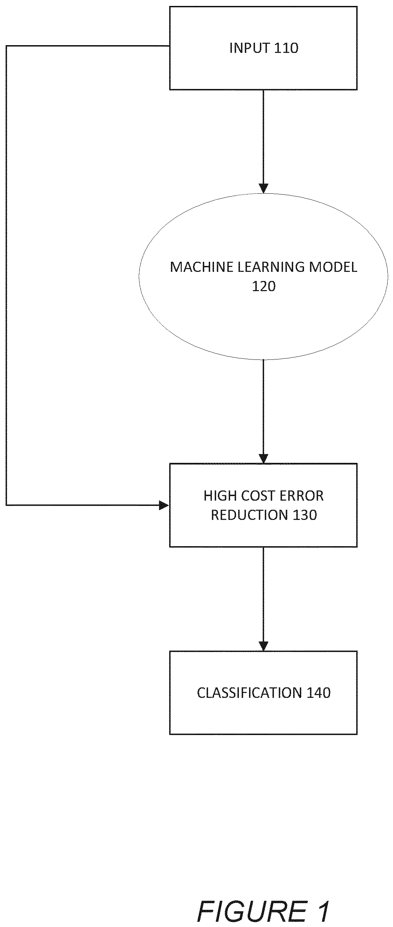

Figure 1 is a simplified schematic indicating example operations which may be performed in implementations of the disclosed technology. Figure 1 illustrates an input 110 to a machine learning model 120, output of the machine learning model 120 and input 110 being provided to a "high-cost error" reduction function 130, and output of the high-cost error reduction function 130 being provided as classification 140.

Input 110 may comprise one or more input data item. The input data items may comprise one or more numerical values. For instance, the input data items may comprise a single numerical value, or may comprise a multi-dimensional vector. In some examples, the input data items may comprise an image. In some other examples, the input data items may be one or more words. Various examples of input data items are discussed herein. The input data items may be indicative of one or more states of a technical system. For instance, the input data items may be indicative of a past, current, predicted future, and/or a trend of demand for services in a cloud network system. Additionally or alternatively, the input data items may be or be based on real-world sensor measurement(s). For instance, the input data items may be or be based on a measurement of a signal received from a mobile device.

Machine learning model 120 may be trained to classify the input 110 to the model. For instance, the machine learning model 120 may take as input an input data item and provide as output a classification of the input data item. Machine learning model 120 may provide, as output, a classification to the high-cost error reduction function 130.

It will be appreciated that the machine learning model may be trained in any way that is suitable for providing a classification based on an input can be used. For instance, the machine learning model 120 may be trained using reinforcement learning. An example of a machine learning model based on reinforcement learning is described in "Efficient Auto-Scaling Approach in the Telco Cloud Using Self-Learning Algorithm", P. Tang, et al. Another example is described in "Smart Congestion Control for Delay and Disruption Tolerant Networks", A. P. Silva, et al. Additionally or alternatively, the machine learning model 120 may be trained using transfer learning. An example of such a machine learning model is described in "Transfer Learning for Improving Model Predictions in Highly Configurable Software", P. Jamshidi, et al.

It will also be appreciated that the machine learning model may be any type of machine learning model suitable for providing a classification based on an input. For instance, the machine learning model may be a support vector machine, a deep learning neural network such as a convolutional neural network and the like, ensemble machine learning (including e.g. random forest, boosting, etc.), a decision tree, etc.

The high-cost error reduction function 130 may take as input the classification output from the machine learning model 120. The high-cost error reduction function 130 may be configured to identify potential high-cost errors in the classification of the input 110. Potential high-cost errors may be classifications that, if they are incorrect, would have a high associated cost, and for which a measure of the likelihood of classification being incorrect is in excess of a threshold. The high-cost error reduction function 130 may take action to mitigate the negative impact which may occur as a result of high cost errors. For instance, the high cost error reduction function 130 may change or alter the classification received from the machine learning model when the classification has a high associated cost and a measure of the likelihood of the classification being incorrect is in excess of a threshold. The classification to which the high cost error reduction function 130 changes the classification received from the machine learning model 120 may be associated with an error which has a lower cost than does the initial classification. For instance, the lower cost error may result in a lower negative impact, if the classification is incorrect, as compared to the negative impact resulting from the high cost error.

The high cost error reduction function 130 may be configured to determine a robustness of the classification of the input 110 by the machine learning model 120. High cost error reduction function 130 may identify potential high cost errors based on the determined robustness. The robustness of the output may therefore represent a measure of the likelihood of the classification being incorrect. High cost error reduction function 130 may be configured to determine the robustness of an output classification of the input 110 by the machine learning model 120 when that output classification is associated with a high cost error. For instance, if a type of high cost error comprises an input being misclassified by the machine learning model 120 as a second classification when the correct classification would be the first classification, the high cost error reduction function 130 may only determine the robustness for outputs of the machine learning model 120 which indicate the first classification. When the classification of the input 110 by the machine learning model 120 is not associated with a high cost error, high cost error reduction function 130 may instead output the classification received from the machine learning model 120 to classification 140.

The robustness may be an indication of whether a classification of an input 110 by the machine learning model 120 would change when slight perturbations are applied to the input 110. When the input data items are numerical values, the perturbations may be one or more (e.g. a vector) numerical values which are added, subtracted, or otherwise applied to an input 110. When the input data items are images or pixel values, the perturbations may be an image or one or more pixel values which are added, subtracted or otherwise applied to input 110. When the input data items are one or more words, the perturbations may be one or more words to replace one or more of the words in input 110. The perturbations may be user defined and/or may be determined during the robustness verification.

The robustness may be provided as a numerical value. In some examples, the robustness may be provided as a binary number. For instance, the robustness may be an indication that the machine learning model 120 is not robust (i.e. the classification of input 110 would change) when a given perturbation is applied to input 110. In other examples, the robustness may be provided as any other type of number. For instance, the robustness may be an indication of the perturbation required to be applied to input 110 to change its classification. In some cases, the robustness may be provided as a multi-dimensional vector. For instance, the dimensions in the vector may be representative of a robustness against different classes.

In some examples, a robustness verifier, which determines the robustness of a particular classification may also provide a counter example data item. The counter example data item may be similar to input 110 but would be classified differently by the machine learning model 120 than input 110. The counter example data item may be based on input 110. For instance, the counter example data item may be input 110 applied with perturbations required to change the classification by the machine learning model.

Determining the robustness of the classification received from the machine learning model 120 may be based on robustness verification. For instance, the machine learning model 120 and input 110 may be provided as input to a robustness verifier. Responsive to the input, robustness verifier may provide, as output, data indicative of a robustness of the classification of input 110 by the machine learning model 120. For instance, the data indicative of a robustness may be an indication that the classification is not robust when it would change when a perturbation less than a predefined threshold is applied to the input 110.

An example of robustness verification which may be utilised is described in "Verifying Robustness of Gradient Boosted Models", G. Einziger, et al and is hereby incorporated in its entirety. In this example, the machine learning model is based on gradient boosting. The machine learning model and its robustness properties may be encoded as satisfiability modulo theory (SMT) formulas. The SMT formulas may be provided to a SMT solver, which may provide data indicative of a robustness For instance, the data indicative of the robustness may be an indication that a classification of an input is not robust when it would change when a perturbation less than a predefined threshold is applied to the input. Put another way, the data indicative of the robustness may be an indication that a classification of an input is robust when a perturbation above the threshold would be required to change the classification. The predefined threshold may be user defined or may be estimated by the robustness verifier. In some examples, when a classification is not robust, the SMT solver may additionally or alternatively provide one or more counter examples. In such examples, a classification may be deemed to be robust when the SMT solver does not provide a counter example.

Although only one example of a robustness verifier is discussed above, it will be appreciated that any type of robustness verifier may be used, some of which do not involve SMT solvers. For instance, another example of a robustness verifier, is described in "Neural Network Robustness Verification on GPUs", Müller, et.al.

High cost error reduction function 130 may determine, based on the determined robustness, whether the classification of input 110 by the machine learning model 120 is robust or at least sufficiently robust. For instance, high cost error reduction function 130 may determine whether the robustness and/or the required perturbation to change the classification is above or below a predefined robustness threshold. The predefined robustness threshold may be indicative of an amount of perturbation which is needed to be applied to a data item in order to change the classification of that data item. When a perturbation is less than the predefined robustness threshold, the classification may be determined to be non-robust. When the perturbation is greater than the predefined robustness threshold, the classification may be determined to be robust In other words, the predefined robustness threshold may be indicative of a maximum distance with respect to a data item that needs to be evaluated for robustness of the classification of that data item. The predefined robustness threshold may be set by user input and/or may be determined by the robustness verifier. When the classification of input 110 by machine learning model 120 is determined to be robust, the classification may be output to classification 140.

When the classification of input 110 by machine learning model 120 associated with a high cost error is not determined to be robust, the classification may be determined to be a potential high cost error. Accordingly the high cost error reduction function 130 may change the classification to a different classification which is not associated with a high cost error (and/or is associated with a lower cost error).

As an example, in a two class classification problem with classes A and B, a first type of error may arise when input in class A is misclassified as class B, and a second type of error may arise when input in class B is misclassified as class A. The first type of error may be associated with a higher cost than the second type of error. As a result, when machine learning model 120 provides to the high cost error reduction function 130 class B in response to input 110, and the high cost error reduction function 130 determines that the classification is not robust, high cost error reduction function 130 may change the classification to class A. The classification of class A may then be provided as the output classification 140.

In this example, where the classification is provided by the ML model as class B, either the machine learning model 120 is correct and input is indeed class B, or the machine learning model 120 is mistaken and the input is class A. In changing the classification to class A, either the changed class is now correct as the input is class A or the changed class is now incorrect as the input is class B. However, since the classification is not robust, and given that it may be more negatively impactful to incorrectly determine a class A input as class B than a class B input as class A, it may be determined that the potential negative impact as a result of an incorrect classification can be reduced by changing the classification to class A.

As another example, in a multi-class classification problem with classes C1 to Cn, a first type of error may arise when input in class C5 is misclassified as class C7. This type of error may be associated with a higher cost than any other possible type of error. As a result, when machine learning model 120 provides to the high cost error reduction function 130 class C7 in response to input 110, and high cost error reduction function 130 determines that the classification is not robust, high cost error reduction function 130 may change the classification and provide this as the output classification 140. In some examples, when a first class being misclassified as a second class is considered to be a high cost error (e.g. in the example above, C5 being misclassified as C7), and the classification received from the machine learning model 120 is the second class, the classification may be changed to the first class. For instance, in this example, where the received class is C7, and where class C5 being misclassified as class C7 would result in a high cost error, the class may be changed to C5 and output as classification 140.

In some examples, the classification may be changed to a "safe" class, e.g. a class which is not associated with a high cost error. In such examples, an order or hierarchy between some or all of the different types of misclassifications may be provided or calculated. A safe class may thus be determined as a class which is lower in the hierarchy than the received classification. In addition or alternatively, a safe class may be defined for each class which is associated with a high cost error. For instance, in an example, the ML model may be configured (e.g. trained) to take, as input, images of speed limit signs, and provide, in response, a determination of the speed limit and/or a desired speed of a vehicle. Further, it may be determined that misclassifying an 80 km/h speed limit as a 30 km/h speed limit has a lower cost (e.g. in terms of risk) than misclassifying a 30 km/h speed limit as an 80 km/h speed limit. For instance, the first error may result in the vehicle travelling slower than is possible, but the second error may result in the automated vehicle travelling faster than has been deemed safe. As such, when a classification of 80 km/h is determined as being non-robust, it may be changed to a safe class which in this case may be a classification of 30 km/h. This may be the case even where another possible error is associated with a high cost, for instance, a misclassification of a 60 km/h speed limit as an 80 km/h speed limit, based on the hierarchy.

In other examples, the classification may be changed to the classification, by the machine learning model, of the counter example data item provided by the robustness verifier in response to input 110 and machine learning model 120.

In this way, while overall numbers of erroneous classifications may not be reduced, the number of high cost errors may be reduced. As a result, the negative impact resulting because of errors produced by the machine learning model may be reduced.

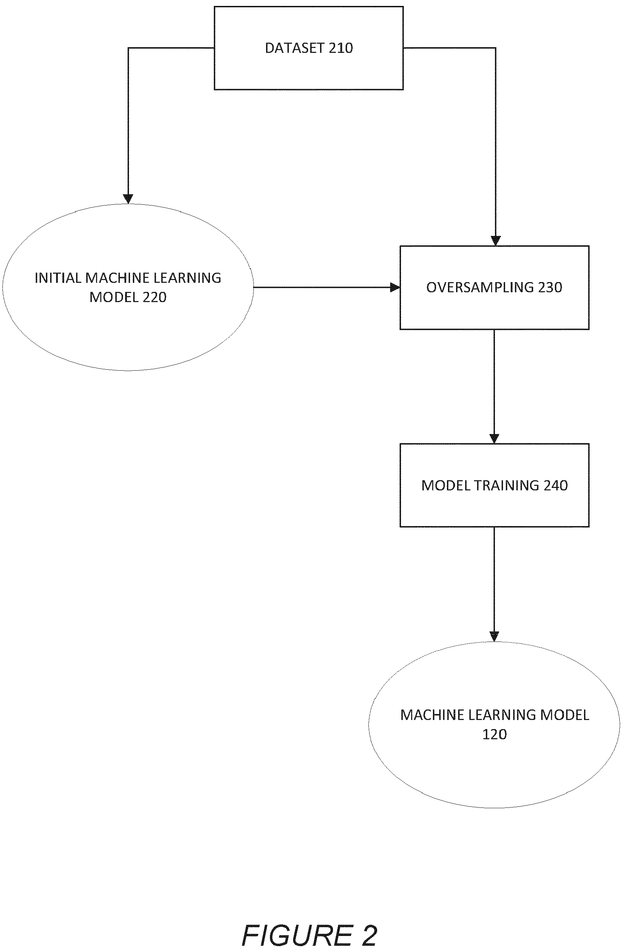

Figure 2 is a simplified schematic indicating example operations which may be performed in training a machine learning model. As will be appreciated, in some examples, a model trained in accordance with various operations described with reference to Figure 2 may be utilised within the approach described with reference to Figure 1.

Figure 2 illustrates a dataset 210, an initial machine learning model 220, oversampling function 230, model training function 240 and machine learning model 120.

Dataset 210 may comprise a plurality of input data items, some or all of which may be labelled with a class. Some or all of the input data items in dataset 210 may have an associated category. For instance, a portion of the input data items in dataset 210 may be categorised as training data, and another portion of the input data items in dataset 210 may be categorised as validation data. In some examples, the categories of the input data items of dataset 210 may be predefined, or may be determined upon request.

An initial machine learning model 220 may be trained to classify input data. It will be appreciated that any type of machine learning model trained in any way which is suitable for providing a classification can be used. In some examples, initial machine learning model 220 may be the same type and/or trained using the same techniques as machine learning model 120. In other examples, initial machine learning model 220 may be a different type and/or trained using different techniques than machine learning model 120.

Initial machine learning model 220 may be trained on some or all of the input data items of dataset 210. For instance, initial machine learning model 220 may be trained on some or all of the input data items of dataset 210 categorised as training data. In some examples, some or all of the data items of dataset 210 categorised as validation data item may be used in validation of initial machine learning model 220.

In some examples, dataset 210 may include many more data items labelled as one class than data items labelled as another class. Dataset 210 may therefore be determined to be imbalanced. In such examples, initial machine learning model 220, having been trained on an imbalanced dataset 210, may be biased towards classifying input data items as the over-represented class in the imbalanced dataset 210. In cases where this would lead to a greater number of high cost errors being made, this bias of the initial machine learning model 220 would therefore result in a greater negative impact as a result of actions performed because of the high cost errors than if the initial machine learning model 220 was not biased. This may include cases where, when a data item labelled as a second class being misclassified as a first class is associated with a high cost error, the dataset 210 includes a greater number of data items labelled as the first classification than data items labelled as the second classification.

As an example, in a two class classification problem with classes A and B, misclassifying an input data item of class A as class B may result in a more negative impact than misclassifying an input data item of class B as class A. Furthermore, class B may be over-represented in dataset 210, and therefore initial machine learning model 220 may be biased towards classifying input data item as class B. As a result, there may be more instances of input data item of class A being misclassified as class B than vice versa, and the overall negative impact as a result of misclassifications by initial machine learning model 220 may therefore be greater than if the instances of misclassifications were balanced.

It may therefore be useful to reduce, remove, or reverse the bias of initial machine learning model 220. An approach to achieving this is by enriching the imbalanced dataset 210 using techniques such as oversampling. An example of oversampling is described in *"*SMOTE: Synthetic Minority Over-sampling Technique", N.V. Chawla, et al. However, known techniques of oversampling do not target error "cost" when balancing datasets.

Oversampling function 230 may be provided with one or more labelled input data items from dataset 210, and the initial learning model 220. In some examples, oversampling function may be provided with some or all of the input data items from dataset 210 categorised as training data.

Oversampling function 230 may identify those input data items which would be classified by the initial machine learning model 220 as one or more particular classes. For instance, the one or more particular classes may be classes associated with high cost errors and/or may be classes which are overrepresented in dataset 210. For instance, continuing with the example above with classes A and B, oversampling function 230 may identify input data items from the dataset 210 classified as class B.

Oversampling function 230 may determine a robustness of classifications of the identified input data items by initial machine learning model 220. In some examples, oversampling function 230 may be configured to determine the robustness of only those data items for which their classification by the initial machine learning model 220 matches their pre-assigned label. For instance, the robustness may be determined using a robustness verifier. Robustness verification has been described in detail above with respect to Figure 1 and so, for brevity, will not be repeated here.

Oversampling function 230 may determine, based on the determined robustness, whether the classifications of the identified data items by initial machine learning model 230 are robust or at least sufficiently robust. For instance, oversampling function 230 may determine whether the robustness and/or a perturbation required to change the classifications satisfies a predefined robustness threshold. The predefined robustness threshold may be indicative of an amount of perturbation which is applied to a data item in order to change the classification of that data item. When a perturbation is less than the predefined robustness threshold, the classification may be determined to be non-robust. When the perturbation is greater than the predefined robustness threshold, the classification may be determined to be robust In other words, the predefined robustness threshold may be indicative of a maximum distance with respect to a data item that needs to be evaluated for robustness of the classification of that data item. The predefined robustness threshold may be determined by user input, or may be determined by the robustness verifier. In some examples, the predefined robustness threshold used here may be the same as the predefined robustness threshold used in relation to high cost error reduction function 130, and in other examples they may be different.

Responsive to determining that a classification of a given identified input data item by the initial machine learning model 230 is not sufficiently robust, oversampling function 230 may, for the given identified input data item, generate a counter example data item. For instance, the counter example data item may be generated using a robustness verifier. The counter example data item may be an input data item which would be classified, by the initial machine learning model 220, as a class which is not associated with a high cost error. For instance, the counter example data item may be generated by modifying the given identified input data item based on perturbations required to change the classification by initial learning model 220.

In some examples, if the procedure does not find any counter example data item that would be classified by the initial machine learning model 220 as a class which is not associated with a high cost error, then it may be determined that there does not exist a good counter example data item to be added to the dataset. As such, oversampling may not be possible for a particular data item. This may be the case, for example, when the classification is found to not be robust, however, the different options of counter example data items are all associated with high cost. In this situation, the high cost error reduction 130 may still be possible, not least since the output classification value 140 does not need to be chosen from the counter example data items.

In some examples, the counter example data item may be an input data item which has been modified based on some perturbation such that it would be classified, by the initial machine learning model 220, as another class. For instance, where a data item of a first class being misclassified as a second class is associated with a high cost error, and the input data item would be classified as the second class, the counter example data item may be generated by modifying the input data item such that it would be misclassified as the first class. For instance, continuing with the example above with classes A and B, where an input data item of class B being misclassified as class A would result in a high cost error (and/or is overrepresented), the counter example data item may be generated by modifying the an input data item such that it would be classified as class A by the initial machine learning model 220.

In other examples, the counter example data item may be a data item which would be classified, by the initial machine learning model 220, as the classification which is the closest alternative classification for the given identified input data item. For instance, the counter example data item may be generated by modifying the given identified input data item based on the smallest amount of perturbations which would change the classification by the initial machine learning model 220.

Additionally or alternatively, for multi class problems, an order or hierarchy between some or all of the different types of misclassifications may be provided or calculated, as mentioned previously. As such, the counter example data item may be a "safe" class, e.g. a class which is not associated with a high cost error. A safe class may thus be determined as a class which is lower in the hierarchy than the received classification. In addition or alternatively, a safe class may be defined for each class which is associated with a high cost error.

As such, it can be defined that misclassifying an item of a first class as a second classification is preferential to a misclassification of an item of the first class as any other class. In this way, the robustness verifier may be explicitly pointed towards looking for examples that are classified as the second class but after a slight perturbation are classified as the first class (and not any other arbitrary class). The (counter example) data items generated as a result of these perturbations are thus relevant for oversampling.

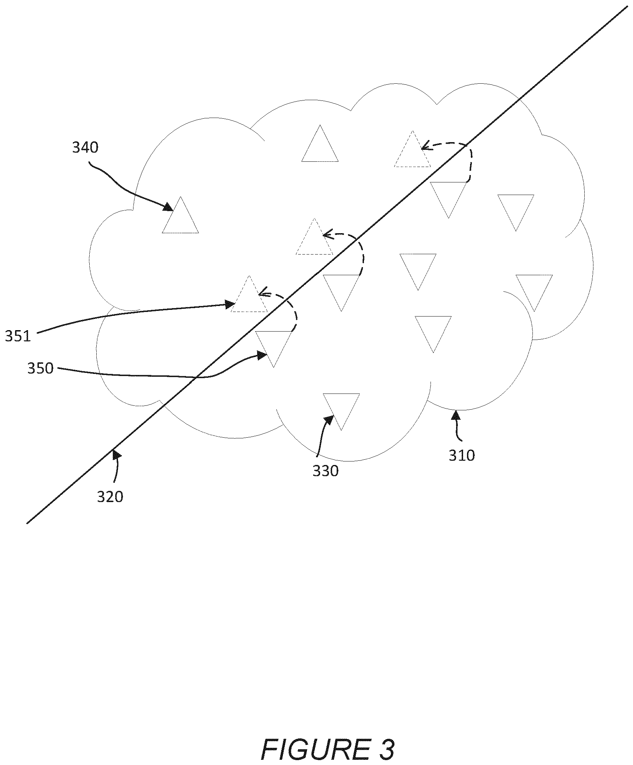

Figure 3 illustrates an example of oversampling. Figure 3 illustrates a dataset 310, containing a number of input data items having been classified as a first class 330, and a number of input data items having been classified as a second class 340. The input data items of the first class 330 are shown as triangles pointing down, and the input data items of the second class 340 are shown as triangles pointing up.

The classification boundary 320 is shown as a line dividing the input data items of the first class 330 from the input data items of the second class 340 in the database. For ease of understanding, the distance between input data items may indicate the difference in their values. As a result, the distance between an input data item and the classification boundary 320 may be indicative of the robustness of a particular input data item.

As can be seen, there are relatively fewer input data items of the second class 340 as compared to the number of input data items of the first class 330. As such, the dataset may be said to be imbalanced, and it may therefore be useful to enrich the dataset to be more balanced. As described above, oversampling may be used to balance the dataset.

As described above, the robustness of the classifications of the over-represented class may be determined. Those classifications of the over-represented class which are not robust or at least not sufficiently robust may be identified. As can be seen in Figure 3, a number of input data items 350 have classifications which are not robust. For instance, these input data items 350 are very close to the classification boundary 320, so that only a small change to their value is required to change their classification.

For the input data items 350 which are determined to not be (sufficiently) robust, a counter example data item 351 may be found. As can be seen, the counter example data items 351, may be similar in value to the input data items 350 used to generate them. For instance, the counter example data items 351 may be the input data items 350 used to generate them with some perturbation applied. As can also be seen, the counter example data items 351 may be located be over the classification boundary 320 from the input data items 350 used to generate them. As such, the counter example data items 351 may be classified differently to the input data items 350 used to generate them.

Returning now to Figure 2, oversampling function 230 may add at least some of the counter example data items to an oversampled dataset. If no counter example data items associated with a low cost were found prior to oversampling function 230, then oversampling may not be performed. The oversampled dataset may also include some or all of the input data item contained in dataset 210. In this way, the oversampled dataset, as compared to the dataset 210, may have less imbalance between numbers of input data items in each class. In some examples, the oversampled dataset may have the same or at least similar numbers of input data items in each class. In some other examples, the oversampled dataset may include more examples of input data items of the initially under-represented class than examples of input data items of the initially over-represented class.

While the oversampling has been primarily described with reference to imbalanced datasets, it will be appreciated that, in other examples, balance (or imbalance) of the dataset may be not be a consideration. For instance, oversampling function 230 may instead perform oversampling of input data items from dataset 210 to increase the representation of classes which are not associated with a high cost error, regardless of whether such classes are under-represented or over-represented. In such examples, dataset 210 may or may not be imbalanced.

The oversampled dataset may be used in model training 240 of machine learning model 120. In this way, bias which may have been present in the classification of the initial machine learning model 220 may be reduced, removed, or reversed. In cases where the bias of the initial machine learning model 220 would lead to a greater number of high cost errors being made, use of the machine learning model 120 may therefore result in overall lower negative impact as a result of actions performed in response to classifications output by machine learning model 120 as compared to use of the initial machine learning model 220. Even in cases where the dataset 210 was not imbalanced, and the dataset 210 was nonetheless oversampled to include more examples of input data items in classes which are not associated with high cost errors, the number of high cost errors may be reduced by use of the machine learning model 120 as compared to the number of high cost errors as a result of using the initial machine learning model 220.

In some implementations of the present technology, both oversampling function 230 and high cost error reduction function 130 may be used in conjunction. In other words, high cost error reduction function 130 may be performed on the output of a machine learning model 120 trained with an oversampled dataset generated by oversampling function 230. In other implementations of the present technology, either oversampling function 230 or high cost error reduction function 130 may be used individually.

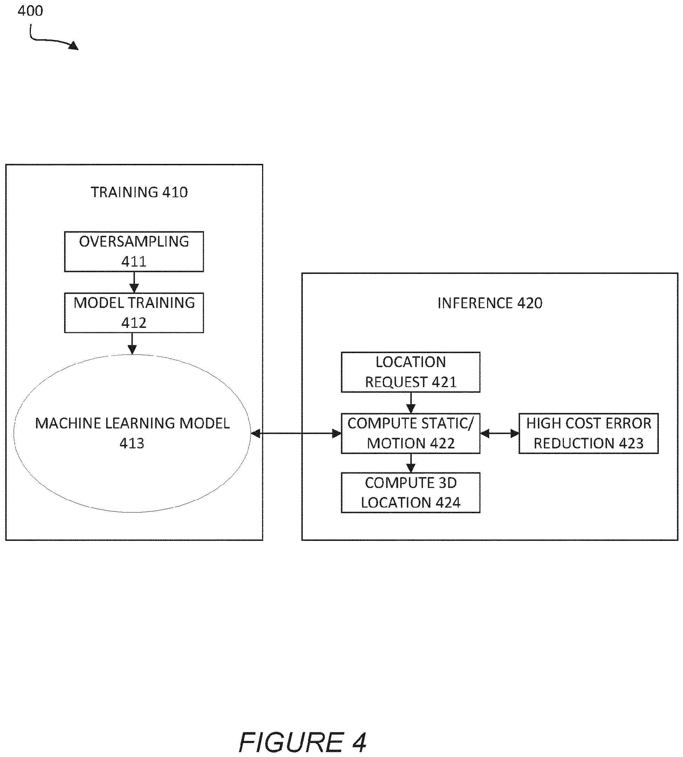

Figure 4 is a simplified schematic of an antenna location planning system 400. Antenna location planning system 400 may be used in the process of installing internal/external antennas supplying service to cellular devices. Antenna location planning system 400 may use ML techniques in determining a suitable location for installation of an antenna and/or a suitable type of antenna to be installed. As illustrated in Figure 4, these ML techniques may involve a training stage 410 and an inference stage 420.

Training stage 410 may comprise oversampling 411 a dataset to generate an oversampled dataset. Model training 412 of a machine learning model 413 may then be performed based on the oversampled dataset. A detailed description of these processes is provided in relation to Figure 2, and so will not be repeated here.

Machine learning model 413 may be trained to classify whether detected mobile devices are static devices or in motion devices. For instance, the machine learning model may be configured to take, as input, a measurement of one or more RF telecommunications signals received from one or more mobile devices and, in response provide, a classification indicating whether the one or more mobile devices are static or in motion.

Based on the number of devices determined to be static or mobile, an installation location for the antenna may be determined. For instance, if the predominance of devices are determined to be static, it may be determined to install an internal antenna. Conversely, if a predominance of devices are determined to be in-motion, it may be determined to install an external antenna.

In some examples, installing a cellular antenna based on a misclassification by the machine learning model that an in-motion device is static may have a higher potential technical resource cost than installing a cellular antenna based on a misclassification by the machine learning model that a static device is in motion. For instance, the potential technical resource cost may be the amount of technical resources required to install the cellular antennas and/or run and/or maintain the cellular service. The technical resources may be, for instance, computer processing resources, electrical power, bandwidth utilisation, physical materials, and/or quality of service. Although only a few examples are mentioned, the technical resources can be any type of technical resource used in installing, running and/or maintaining a technical system.

Inference stage 420 may comprise a request for an installation location of an antenna 421, a computation 422 of whether detected client devices are static devices or in motion devices. Computation of whether detected client devices are static devices or in motion may involve the machine learning model 413 and a high cost error reduction function 423. Based at least in part on the computation 422, a computation 424 of a suitable 3D installation location of an antenna.

During installation of cellular antennas, determining the location of where the cellular antennas should be installed may be instigated with a location request 421. In response to a location request 421, signals from prospective client mobile devices may be received and measured. Additionally or alternatively, the signals have been measured previously and are available in a data repository. In such a case, the location request 421 may trigger a database query in order to retrieve the data to be analysed. The retrieved data may also be complemented with more recent data, received and measured as indicated before.

A determination 422 as to whether the prospective client mobile devices are static or in motion may be computed, for instance, based on the received signals. The determination 422 may be made by the machine learning model 413. For instance, the machine learning model 413 may provide a classification indicating whether the prospective client mobile devices are static or in motion in response to input data.

The output of the machine learning model 413 may be modified by the high cost error reduction function 423 in the manner described with reference to Figure 1.

A computation 424 of the 3D installation location of the cellular antenna(s) may be based, at least in part, on the output of the high cost error reduction 423. For instance, if the output of the high cost error reduction 423 indicates that a large number of the prospective client mobile devices are static, and therefore likely to be in a building, the 3D installation location of at least one cellular antenna may be computed as being inside the building. In some examples, a decision may also be made to install an internal-type cellular antenna based on the output of the high cost error reduction 423. In some examples, the cellular antennas may be installed at the location computed, based at least in part, on the output of the high cost error reduction 423.

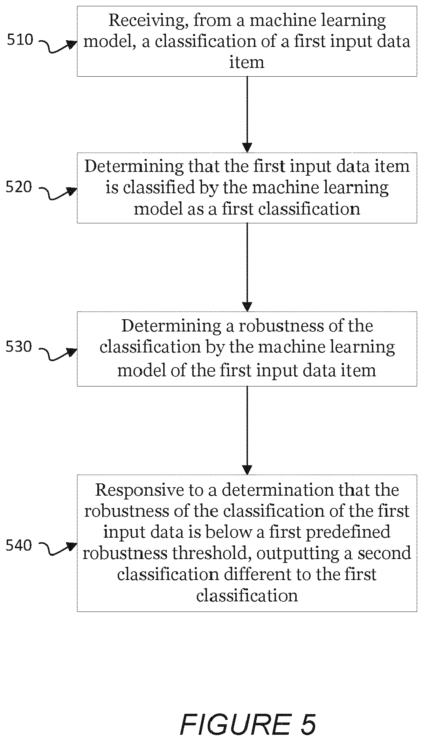

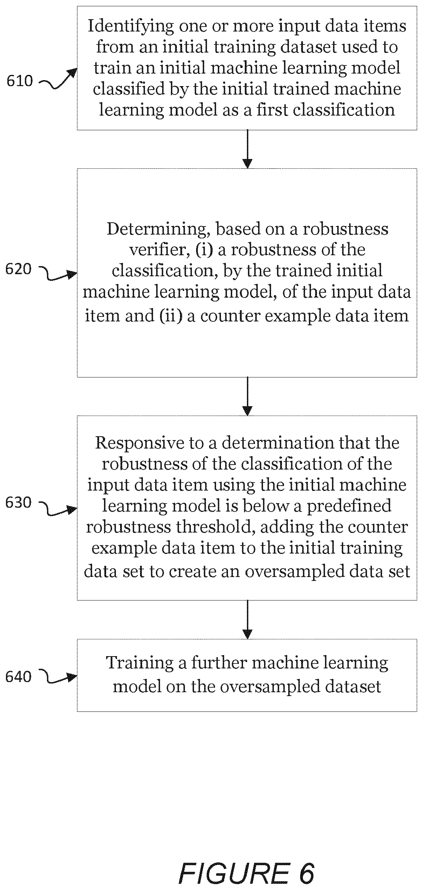

Figures 5 and 6 are flow diagrams showing operations that may be performed in various examples of the described technology. It will be appreciated that variations are possible, for example to add, remove and/or replace certain operations. The operations may be performed in hardware, software or a combination thereof.

As shown in Figure 5, operation 510 may comprise receiving, from a machine learning model, a classification of a first input data. The machine learning model may be trained to infer classifications of input data. Determinations relating to performance of real-world actions may be based at least in part on the classifications by the machine learning model. The machine learning model may be, for instance, the machine learning model 120 as described in relation to figures 1 to 4.

Operation 520 may comprise determining that the first input data item is classified by the machine learning model as a first classification. Operations 530 and 540 may be performed in response to the determination.

Operation 530 may comprise determining a robustness of the classification of the first input data item as the first classification by the machine learning model.

Operation 540 may comprise, responsive to a determination that the robustness of the classification of the first input data item is below a first predefined robustness threshold, outputting a second classification different to the first classification.

As shown in Figure 6, operation 610 may comprise identifying one or more input data from an initial training dataset used to train an initial machine learning model classified by the trained machine learning model as a first classification. Operations 620 and 630 may be performed in relation to the identified input data. The initial machine learning model may be trained to infer classifications of input data.

Operation 620 may comprise determining, based on a robustness verifier, (i) a robustness of the classification, by the trained initial machine learning model, of the input data item and (ii) a counter example data item. The counter example data item may be such that the initial machine learning model would determine the second classification for the counter example data item.

Operation 630 may comprise, responsive to a determination that the robustness of the classification of the input data item using the initial machine learning model is below a predefined robustness threshold, adding the counter example data item to the initial training data set to create an oversampled data set.

Operations 610, 620, and 630 may be repeated for the one or more input data items in a subset of the initial training dataset used to train the initial machine learning model. The subset may include some or all of the initial training dataset.

Operation 640 may comprise training a further machine learning model on the oversampled dataset.

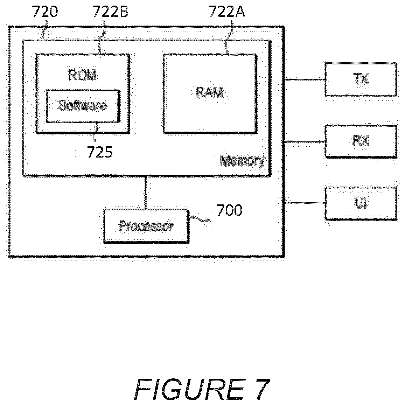

Figure 7 is a schematic view of an example apparatus which may be configured to perform various operations described herein.

The apparatus comprises at least one processor 700 and at least one memory 720 directly or closely connected or coupled to the processor. The memory 720 may comprise at least one random access memory (RAM) 722A and at least one read-only memory (ROM) 722B. Computer program code (software) 725 may be stored in the ROM 722B. The apparatus may be connected to a transmitter path and a receiver path in order to obtain respective signals comprising the aforementioned data. The apparatus may be connected with a user interface (UI) for instructing the apparatus and/or for outputting data. The at least one processor 700 with the at least one memory 720 and the computer program code may be arranged to cause the apparatus to at least perform methods described herein.

The processor 700 may be a microprocessor, plural microprocessors, a control, or plural microcontrollers.

The memory 720 may take any suitable form.

The transmitter path and receiver path between any of the described apparatus may be established using a transceiver module which may be arranged suitable for any form of radio communications, for example cellular radio communications according to 2G, 3G, 4G, 5G or future-generation standards.

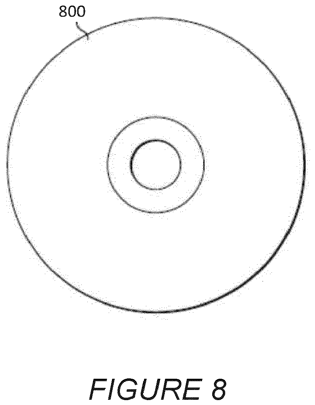

Figure 8 shows a non-transitory media 800 according to some embodiments. The non-transitory media 800 is a computer readable storage medium. It may be e.g. a CD, a DVD, a USB stick, a blue ray disk, etc. The non-transitory media 800 stores computer program code causing an apparatus to perform operations described above when executed by a processor such as processor 700 of FIG 7.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data item when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM, etc.), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

## Claims

1. Apparatus comprising means for:
receiving, from a machine learning model, a classification of a first input data item, the machine learning model being trained to infer classifications of input data items, wherein determinations relating to performance of real-world actions are based at least in part on the classifications;
responsive to the first input data item being classified by the machine learning model as a first classification:
determining a robustness of the classification by the machine learning model of the first input data item; and
responsive to a determination that the robustness of the classification of the first input data item as the first classification is below a first predefined robustness threshold, outputting a second classification different to the first classification.

2. The apparatus of claim 1, comprising means for:
determining to perform or not perform a particular real-world action based on the output classification; and/or
performing the particular real-world action based on the output classification.

3. The apparatus of claim 1 or claim 2, wherein the determinations relating to performance of real world actions comprises controlling or configuring a telecommunication network based at least in part on the classifications.

4. The apparatus of any one of the preceding claims, wherein performance or non-performance of a particular real-world action based on a first type of misclassification of input data item as the first classification has a higher potential technical resource cost and/or a more negative effect on provision of a service by a technical system than performance or non-performance of a particular real-world action based on a second type of misclassification of input data item as the second classification.

5. The apparatus of any one of the preceding claims, wherein the determination of at least some of the costs of performance of the particular real-world actions based on the misclassifications is based on a calculation of the potential technical resource cost and/or effect on provision of the service by a technical system in respect of which the real-world action is to be performed.

6. The apparatus of any one of the preceding claims wherein the means are configured to respond to the first input data item being classified by the machine learning model as a classification other than the first classification by outputting the classification other than the first classification.

7. The apparatus of any one of the preceding claims, wherein the machine learning model has been trained on an oversampled training dataset, the oversampled training dataset being generated by oversampling input data items labelled as the second classification by:
responsive to determining that a classification of the first classification, by an initial machine learning model, of an input training data item from an initial training dataset used to train the initial machine learning model, has a robustness below a second predetermined robustness threshold, adding to the initial dataset a new input training data item having the second classification.

8. The apparatus of claim 7, wherein the oversampling comprises, for a given input data item labelled as the first classification:
determining, based on a robustness verifier, (i) a robustness of a classification, by the initial machine learning model, of the given input data item and (ii) a counter example data item, wherein the initial machine learning model would determine the second classification for the counter example data item; and
responsive to a determination that the robustness of the classification of the data item using the initial machine learning model is below the second predetermined robustness threshold, adding, to the oversampled dataset, the counter example data item, and optionally:
wherein the robustness is indicative of perturbations required to be applied to the given input data item to change the classification, by the initial machine learning model, to the second classification, and wherein the counter example data item is generated by modifying the given input data item based on the perturbations.

9. The apparatus of any one of the previous claims wherein the apparatus is, or is part of a system for installing cellular antennas using 3D geo-location, wherein the machine learning model is configured to classify cellular devices detected by the system as being static or in motion and the determinations relating to performance of real world actions comprises determining a configuration of installation of a cellular antenna based at least in part on the classifications by the machine learning model, wherein installing a cellular antenna based on a misclassification by the machine learning model that an in-motion detected device is static has a higher potential technical resource cost than installing a cellular antenna based on a misclassification by the machine learning model that a static detected device is in motion.

10. The apparatus of any one of claims 1 to 8 wherein the apparatus is, or is part of a system for use in a cloud service controller, wherein the machine learning model is configured to classify a cloud service load data item as an indication as to whether to scale up the cloud service or scale down the cloud service, and the determinations relating to performance of real world actions comprises determining whether to scale up the cloud service or scale down the cloud service based at least in part on the classifications by the machine learning model, and wherein scaling down the cloud service based on a misclassification by the machine learning model of the cloud service load data item has a higher potential technical resource cost than scaling up the cloud service based on a misclassification by the machine learning model of the cloud service load data.

11. Apparatus comprising means for:
for one or more input data items in an initial training dataset used to train an initial machine learning model, wherein the one or more input data items would be classified by the initial machine learning model as a first classification:
determining, based on a robustness verifier, (i) a robustness of the classification, by the trained initial machine learning model, of the input data item and (ii) a counter example data item, wherein the counter example data item is such that the initial machine learning model would determine a second classification for the counter example data item; and
responsive to a determination that the robustness of the classification of the input data item using the initial machine learning model is below a predefined robustness threshold, adding the counter example data item to the initial training data set to create an oversampled data set; and
training a further machine learning model on the oversampled dataset.

12. Method comprising:
receiving, from a machine learning model, a classification of a first input data item, the machine learning model being trained to infer classifications of input data items, wherein determinations relating to performance of real-world actions are based at least in part on the classifications;
responsive to the first input data item being classified by the machine learning model as a first classification:
determining a robustness of the classification by the machine learning model of the first input data item; and
responsive to a determination that the robustness of the classification of the first input data item as the first classification is below a first predefined robustness threshold, outputting a second classification different to the first classification.

13. The method of claim 12, further comprising performing the particular real-world action based on the output classification.

14. The method of claim 13, wherein the particular real-world action comprises controlling or configuring a telecommunication network based at least in part on the classifications.

15. A computer program product comprising a set of instructions which, when executed on an apparatus, cause the apparatus to carry out the method of any one of claims 12 to 14.
